(19) **Europäisches Patentamt**
**European Patent Office**
**Office européen des brevets**

(11) **EP 2 957 611 A1**

(12) **EUROPEAN PATENT APPLICATION**

(43) Date of publication:
**23.12.2015 Bulletin 2015/52**

(51) Int Cl.:
***C09J 167/06*** (2006.01)     ***C09J 175/06*** (2006.01)
***C08L 67/06*** (2006.01)     *C08G 18/68* (2006.01)

(21) Application number: **14173248.7**

(22) Date of filing: **20.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **NITTO DENKO CORPORATION**
**Osaka 567 (JP)**

(72) Inventors:
 • **Schüwer, Nicolas**
  **1007 Lausanne (CH)**
 • **Vendamme, Reichard**
  **3500 Hasselt (BE)**

(74) Representative: **Hoffmann Eitle**
**Patent- und Rechtsanwälte PartmbB**
**Arabellastraße 30**
**81925 München (DE)**

(54) **Debondable adhesive composition**

(57)   The present invention pertains to compositions containing a polycondensate derived from a dicarboxylic acid component, a diol component and an ethylenically unsaturated dicarboxylic acid component. Said composition may be crosslinked to yield an adhesive composition. The adhesive composition of the invention may be used for tapes and patches in the medical field, but also for non-medical applications such as masking tapes, protective tapes and for bonding of semiconductor elements. The adhesive composition of the invention may be irradiated to thereby reduce the adhesive strength in a controlled manner.

EP 2 957 611 A1

**Description**

*1. Technical Field of the Invention*

The present invention is directed at a composition comprising a reactive unsaturated polycondensate derived from an ethylenically unsaturated dicarboxylic acid and/or an ethylenically unsaturated diester monomer, a diol monomer and a dicarboxylic acid monomer and a crosslinking agent, wherein the unsaturated polycondensate and the cross-linking agent are capable of reacting with each other to form a debondable pressure sensitive adhesive *via* a chemical reaction that does not involve the ethylenically unsaturated repeating units contained in the polycondensate. The adhesion strength of the resulting adhesive may be subsequently reduced via post-curing of the ethylenically unsaturated repeating units contained in the polycondensate.

The invention is also directed at a debondable adhesive obtained by at least partly cross-linking said composition, at a method for preparing and/or manufacturing the debondable adhesive and at the use of the debondable adhesive for laminating a sheet or a film, tapes and /or patches.

*2. State of the art*

US 2012/0202058 A1 relates to polyester based pressure-sensitive adhesive sheet for surface protection. The polyester is composed of bio-based raw material such a lactic acid, a dibasic acid unit (e.g. dimer fatty dicarboxylic acid) and a glycol unit. The polyester is crosslinked using a polyfunctional isocyanyate.

EP 2 567 996 A1 and WO 2011/023255 A1 relates to bio-based pressure sensitive adhesive obtained by chemical crosslinking of a polycondensate of, for instance, dimer of a fatty alcohol and dimer of a fatty acid. As for US 2012/0202058 A1, the crosslinking technology reported in these patents may not be the most desired for biomedical applications since they contain chemicals presenting undesired biological effects.

WO 97/27253 A1 relates to a radiation-curable powder paint binder composition comprising a resin and an optional crosslinker in which more than 0,5 mol % of the total amount of polymerizable ethylenic unsaturation of the binder composition results from itaconic acid ester units.

US 3,989,609 relates to polyester based coatings in which itaconic acid can be used as a co-monomer that is reacted with, for instance, polyamide leading to a UV-curable prepolymer. The formulation described in this patent can find use as radiation curable resistant coatings.

WO 2010/108965 A1 relates to unsaturated polyester resin comprising itaconate, citraconate and/or mesaconate ester units as reactive unsaturation. This polyester resin is claimed to be suitable for the manufacturing of structural part.

US 3,299,010 relates to pressure sensitive adhesive polymers and tapes in which itaconic acid can be used as a co-monomer to form polymers having polyamide or polyacrylate backbones. The preparation of the adhesive sheets in accordance with this patent document is disadvantageous in that it requires substantial amounts of organic solvents, either in the initial polymerization step or in the cross-linking step if the initial polymerization reaction is a polycondensation.

US 2010/0316845 A1 relates to adhesive article which is debondable from substrates with the application of heat. This invention is based on a combination of a shape memory polymer backing having a temporary, deformed shape and pattern of latent projections coated with an amorphous pressure sensitive adhesive layer. The preparation of the adhesive sheets in accordance with this patent document is disadvantageous in that it requires complex protocol. Typical condition disclosed for triggering the debonding call for exposure at high temperature ($\geq$100°C) for up to 15 min.

WO 03/061720 A1 relates to adhesive system and method for activating or deactivating said adhesive. The patent document describes a skin adhesive system based on hydrocolloids in which adhesiveness can be activated or deactivated. The method for activating or deactivating the adhesiveness of an adhesive composition is based on the usage of ionic solution which acts on the hydrocolloids in such a way that the physico-chemical state thereof is modified.

WO 00/61692 relates to UV light switchable adhesive polymer capable of switching form tacky to less tacky state. The adhesive formulation is composed of a mixture functional polymer, using for instance norborn-2-ene methacrylate monomer, and a photoinitiator.

US 4,286,047 relates to pressure-sensitive adhesive susceptible to ultraviolet light-induced detackification. The adhesive system is based on a blend of oxirane ring-bearing component including an effective amount of onium salts ionic photoinitiator capable of promoting the polymerization of oxirane rings, whereby said adhesive is readily detackified by exposure to actinic radiation.

US 2011/0224593 A1 relates to switchable adhesives composition comprising a mixture of a polyacrylate adhesive; an unsaturated curable molecule (*i.e.* acrylate or methacrylate derivative), and a photoinitiator. This formulation is claimed to find use as adhesive medical dressing.

Boyne and coworkers (International Journal of Adhesion & Adhesives 21 (2001) 49-53) disclosed a pressure-sensitive adhesive capable of reducing its level of adhesion when exposed to visible light. The adhesive system reported is based on a mixture of a polyacrylate copolymer and a photoinitiator. The reduction in adhesion level was shown to be dependant on the intensity of light source used its wavelength spectra and the irradiation time. Similar formulation can find usage as medical grade adhesives (International Journal of Adhesion & Adhesives 19 (1999) 29-34).

### 3. Problem solved by the invention

Having regard to the states of the art summarized above in the field switchable adhesive formulations, there remains a need for adhesives and patches containing the same, which provide high adhesion level that can be lowered upon demand in order to facilitate the removal.

In particular, in the biomedical field many applications call for strong adhesion (i.e. colostomy, traction adhesive, dialysis application, indwelling catheter securing, etc...). However, strong adhesion to the skin often leads to pain and skin damage during peel off. Therefore providing an adhesive system able strong adhesion but requiring little force to peel off is of great advantage.

It is the aim of the present invention to produce a switchable adhesive that possesses enhanced properties as compared to already known system but that do not rely on previously known chemistry (such as acrylic or epoxide polymer).

Previously reported debondable adhesive tape rely on poly(meth)acrylate chemistry (e.g. US 2011/0224593 A1). The present invention relies on the use of different chemistry based on polyester which offers enhanced property in terms of adhesion level that can be fine-tuned. Both the level of adhesion before and after the debonding can be adjusted even without the use of tackifier. Furthermore compared to the example mentioned above the system reported herein accomplishes excellent results even when relying on fewer components and therefore presents an advantage on the economical and production level. Of course, the additional use of further components such as tackifiers is by no means excluded.

Other acrylic based debondable adhesives known in the prior art (e.g. International Journal of Adhesion & Adhesives 21 (2001) 49-53) exhibit a relatively low peel force value before debonding and require long irradiation time (up to 10 min) in order to debond. It is another aim of the present invention to provide a fast responding system. Moreover the adhesive composition reported by this research group (cf. International Journal of Adhesion & Adhesives 21 (2001) 49-53 and International Journal of Adhesion & Adhesives 19 (1999) 29-34) are based on functional polymers obtained by post-polymerization reaction of a prepolymer. The adhesive formulations reported in the present application rely on functional polymer obtained via direct polymerization and do not require post-polymerization reaction. Such post-polymerization reactions in the prior art require additional synthetic and purification steps, and are usually more difficult to control as compared to the direct synthesis of functional polymer reported in the present invention. In comparison with this state of the art, the present invention therefore solves the problem of providing adhesive compositions that are easier to synthesize.

Additionally, in comparison to most of the switchable adhesive formulations reported so far, the invention described herein permits to use mainly building blocks derived from renewable resources and the associated processes may be conducted in a solvent-free manner or in the presence of little amount of solvent. Therefore the present invention furthermore solves the problem of providing switchable adhesive compositions as outlined above, wherein the carbon footprint in production and use of the adhesives is low.

The compositions and adhesives in accordance with the present invention exhibit a tunable adhesion level before debonding and a high level of transparency. Hence, they are suitable for a broad range of applications.

It is also an aim of the present invention to produce a switchable adhesive that possesses equivalent or enhanced properties as compared to already known adhesives but at advantageous production and raw material costs.

### 4. Summary of the Invention

The present invention meets this demand as it provides adhesives, and in particular so-called pressure sensitive adhesives, that possess adjustable adhesion level allowing debonding on-demand in an easy, rapid and cost-efficient manner. Additionally, it is preferably made by using as much as possible of bio-based materials.

In particular, the above problems are solved by the composition specified in appended claim 1. Preferred embodiments of the composition of the present invention are characterized in subsequent claims 2 to 11. The present invention further pertains to an adhesive composition obtained by at least partial crosslinking of the composition of appended claims 1 to 11, as specified in appended claim 12. The manufacturing process of the present invention is characterized in appended claim 13. The different uses of the adhesive composition according to the present invention are specified in appended claim 14. Laminated products containing the compositions of the present invention are characterized in appended claim 15. The method for debonding according to the present invention is specified in appended claim 16.

### 5. Detailed Description of the Invention

### 5.0 Description of Figure

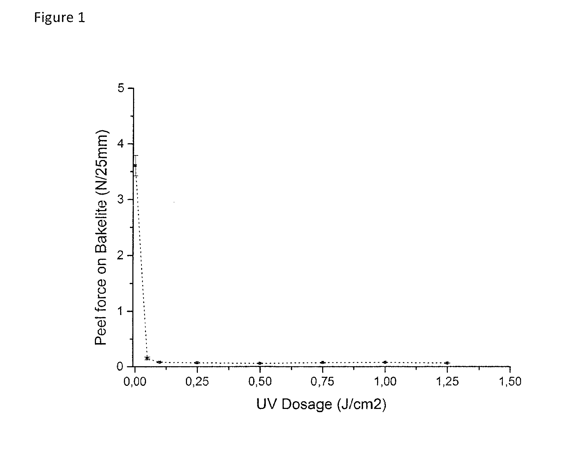

Figure 1 shows the evolution of the peel force value as a function of the irradiation dosage for adhesive 4 of Example 1.

### 5.1 Definitions

The term "switchable adhesive formulation" is used in the context of the present invention to refer to an adhesive formulation, wherein the peel force can be decreased by the influence of one or more suitable external factors such as electromagnetic radiation, heat, etc. The term **"debondable adhesive formulation"** is used as an alternative expression to have the same meaning.

The term *"adhesive gel content value"* refers to the value determined by the known method reported earlier (Vendamme R. and Eevers W. Macromolecules 46 (2013)6 3395-3405).

The term *"α transition"* refers to the value determined by rheology. Rheological measurements were performed on a Discovery HR-2 hybrid rheometer (TA Instruments) in oscillation mode using parallel plate geometry. The α transition was measured by monitoring tan δ by scanning the temperature from -100°C to 150° (ramp of 5 K/min) while imposing a constant strain of 0.4% and at a frequency of 1 Hz (linear regime conditions).

The term *"peel force"* or *"adhesion level"* refers to the force required to remove the tape once it is applied to substrate surface. It can be measured using a Shimadzu Ag-X universal tensile testing machine equipped with 1000N force cell.

Unless specified otherwise, references to the *molecular weight* of a polymeric substance are to be understood as references to the weight average molecular weight, which is determined by GPC using Shimadzu GPC system equipped with a differential refractive index detector and calibrated with polystyrene standards.

Unless specified otherwise, amount *indications in* % are to be understood as indications in weight %.

The *"acid value"* is defined as the mass of potassium hydroxide (in mg) required to neutralized 1g of polycondensate, and is measured by direct titration using a standard ethanolic potassium hydroxide solution. Preferably, this measurement is carried out by dissolving a known amount of polycondensate in THF and titrating the obtained solution with 0.1N KOH ethanolic solution using an automatic titration device (Metrohm, Switzerland). This measurement is performed at 25°C.

The *"hydroxyl value"* is defined as the mass of potassium hydroxide (in mg) equivalent to the hydroxyl content of 1g of polycondensate. It is measured by acetylation of the polycondensate followed by hydrolysation of the excess of acetic anhydride. The acetic acid formed is subsequently titrated with an ethanolic potassium hydroxide solution. Preferably the measurement is carried out by dissolving a known amount of polycondensate in THF, acetylating the mixture using a solution of acetic anhydride and 4-(dimethylaminopyridine) in THF (reaction time 15 min), quenching the excess of acetic anhydride (reaction time 30 min) with 4/1 mixture of THF/water (volume ratio); and running a back titration of the acetic acid formed during the quenching step with 0.5N KOH ethanolic solution using an automatic titration device (Metrohm, Switzerland). This measurement is performed at 25°C.

The term *"fatty acid"* is meant to refer to carboxylic acids having a long aliphatic chain, which may be saturated or may contain one or more unsaturations. The aliphatic chain may range from 4 to 30 carbon atoms, preferably from 6 to 28 carbon atoms, more preferably from 8 to 25 carbon atoms and even more preferably from 10 to 22 carbon atoms.

The term "*fatty alcohol*" is meant to refer to an aliphatic alcohol having a long aliphatic chain, which may be saturated or may contain one or more unsaturations. The aliphatic chain may range from 4 to 30 carbon atoms, preferably from 6 to 28 carbon atoms, more preferably from 8 to 25 carbon atoms and even more preferably from 10 to 22 carbon atoms.

The term *"bio-based"* is meant to refer to substances derived from renewable starting materials (as opposed to mineral oil-derived starting materials) by isolation and optionally one or more chemical transformations.

In the context of the present application, the term *"comprising"* is meant to introduce an open list, such that further unmentioned members are not excluded. However, the use of "comprising" is intended to specifically characterize also the scenario, wherein no further unmentioned members are present. In other words, a disclosure of "comprising" is to be understood as a disclosure of "consisting of" as one distinct option.

In the context of the present application, the reference to a feature being a "*preferred*" feature is meant to indicate that it is preferred to combine this feature with other preferred features of the present application. All such combinations of preferred features with other preferred features are meant to be directly and unambiguously disclosed. For instance, it is preferred to use the preferred dicarboxylic acids of formula (I) in combination with the preferred diols of formula (II) and the preferred ethylenically unsaturated dicarboxylic acids of formula (III), wherein each of these preferred individual components are as specified in the respective sections of the description below.

In the context of the present application, multiple limitations are to be considered in a cumulative manner.

The term **"curing reaction"** is used herein to characterize the condensation-type cross-linking reaction described in Section 5.3.7 below. The term **"post-curing reaction"** is used herein to characterize the radical-type polymerization reaction described in Section 5.3.8 below.

Unless specified otherwise, references to **"dicarboxylic acid"** in the present application are intended to refer to the respective dicarboxylic acid and the corresponding mono- or di-$C_{1-8}$-alkyl esters and preferably the mono- or di-$C_{1-4}$-alkyl esters.

If the following description provides **relative amount indications** for two or more components of the same composition, wherein the specified upper limits add up to more than 100%, the indication is to be understood such that one or more of the individual amount indications contains a further implicit restriction to those relative amounts, which add up to 100% together with the remaining amount indications.

If amount indications are given with respect to the polycondensate A, then, unless specified otherwise, the amount of polycondensate A is to be taken as 100 wt%.

## 5.2 Polycondensate (A)

### 5.2.1 Raw materials

The polycondensate (A) reported herein is obtained by reaction of raw materials comprising at least one dicarboxylic acid (a) and at least one diol (b), at least one ethylenically unsaturated dicarboxylic acid (c) and optionally one or more of the optional components (d).

**Dicarboxylic acid (a):**

In principle, any dicarboxylic acid can be used as component (a), which is capable of undergoing polycondensation reaction with diol components, provided that the ethylenically unsaturated dicarboxylic acids specified as component (c) below are excluded. The dicarboxylic acids suitable for use in the present invention are preferably characterized by the following general formula (I):

$$R^aOOC\text{-}R^1\text{-}R^2\text{-}R^3\text{-}COOR^b \qquad (I)$$

wherein $R^1$ is absent or selected from $C_{1-15}$ alkylene, $C_{11-15}$ alkenylene, and $C_{2-15}$ alkynylene; $R^2$ is selected from $C_{1-12}$ alkylene, $C_{11-12}$ alkenylene, and $C_{2-12}$ alkynylene, each of which may contain one or two 5-7-membered rings, which may optionally be condensed; $R^3$ is absent or selected from $C_{1-15}$ alkylene, $C_{11-15}$ alkenylene, and $C_{2-15}$ alkynylene. Each of these groups may be unsubstituted or substituted by 1-3 substituents, wherein said substituents neither contain hydroxyl nor carboxyl or carboxylic acid ester groups and are preferably selected from $C_{1-8}$ alkyl, $C_{2-8}$ alkynyl, $C_{1-6}$ alkoxy. Each of $R^a$ and $R^b$ is independently selected from hydrogen, and alkyl groups having 1 to 8 carbon atoms. One or more dicarboxylic acids (a) may be used either singly or in combination.

In a preferred embodiment, $R^1$ is absent; $R^2$ is selected from $C_{3-10}$ alkylene, $R^2$ being unsubstituted or substituted by 1-3 substituents, wherein said substituents are selected from $C_{1-6}$ alkyl; $R^3$ is absent. Each of $R^a$ and $R^b$ is independently selected from hydrogen and alkyl groups having 1 to 4 carbon atoms.

In another preferred embodiment dicarboxylic acid (a) is a dimer of a fatty acid, wherein dimerization may for instance involve a 4+2 cycloaddition to yield a 6-membered cycle. Suitable dimers are described for instance in Gubbles et al. Macromolecules 46 (2013) 3975-3984 and Vendamme et al. Macromolecules 46 (2013) 3395-3405.

Fatty acids suitable for dimerization may be selected from mono- and polyunsaturated fatty acids such as oleic acid, linoleic acid, stearidonic acid, eicosatrienoic acid, eicosatetraenoic acid, eicosapentaenoic acid, clupanodonic acid, docosahexaenoic acid, tetracosapentaenoic acid, nisinic acid, mead acid, arachidonic acid, adrenic acid or calendic acid, and/or mixtures thereof as well as palmitoleic acid, eleostearic acid, ricinoleic acid, vernolic acid, licanic acid, myristoleic acid, margaroleic acid, gadoleic acid, eicosadienoic acid and/or erucic acid or mono- or dialkyl esters and mixtures thereof. In a further preferred embodiment, the fatty acid is selected from the group consisting of a linoleic, linolenic, stearidonic, eicosadienoic, eicosatrienoic, eicosatetraenoic, eicosapentaenoic, clupanodonic, docosahexaenoic, tetracosapentaenoic, nisinic, mead, arachidonic, adrenic or calendic acid or mono- or dialkyl esters and mixtures thereof. The dimer may be partially or fully hydrogenated after dimerization.

Dimers of fatty acid are commercially available. For example, dimers of oleic acid or linoleic acid are available from Croda (The Netherlands) under the trade name PRIPOL 1009 or Pripol 1006, or Oleon (Belgium) under the trade names Radiacid 0976 or Radiacid 0975. These compounds have high purity, are fully hydrogenated, and are distilled aliphatic dimer acids. These products appear as colorless to lightly colored, clear viscous liquids. Preferred properties can be summarized as follows:

| Purity | ≥95% |
|--------|------|
| Acid value | 194-201 mg KOH/g |

Partially hydrogenated dimers of fatty acid can be obtained for instance from Arizona Chemicals (The Netherlands), under the trade mark UNIDYME.

In another preferred embodiment in combination with any of the above or below embodiments, the dimer of fatty acid used for the polycondensation is fully hydrogenated.

Diol (b):

In principle, any diol can be used as component (b), which is capable of undergoing polycondensation reaction with dicarboxylic acid components. Diol (b) is preferably selected from the compounds characterized by the following general formula (II):

$$HO-R^4-R^5-R^6-OH \qquad (II)$$

wherein $R^4$ is absent or selected from $C_{1-15}$ alkylene, $C_{2-15}$ alkenylene, and $C_{2-15}$ alkynylene; $R^5$ is selected from $C_{1-12}$ alkylene, $C_{2-12}$ alkenylene, and $C_{2-12}$ alkynylene, each of which may contain one or two 5-7-membered rings, which may optionally be condensed; $R^6$ is absent or selected from $C_{1-15}$ alkylene, $C_{2-15}$ alkenylene, and $C_{2-15}$ alkynylene. Each of these groups may be unsubstituted or substituted by 1-3 substituents, wherein said substituents neither contain hydroxyl nor carboxyl or carboxylic acid ester groups and are preferably selected from $C_{1-6}$ alkyl, $C_{2-6}$ alkenyl, $C_{2-6}$ alkynyl, $C_{1-6}$ alkoxy. One or more diols (b) may be used either singly or in combination.

In a preferred embodiment, $R^4$ is absent; $R^5$ is selected from $C_{3-10}$ alkylene, and $C_{4-10}$ alkenylene, each of which may be unsubstituted or substituted by 1-3 substituents, wherein said substituents are preferably selected from $C_{1-6}$ alkyl; $R^6$ is absent.

In another preferred embodiment, diol (b) is a dimer of a fatty alcohol, wherein dimerization may for instance involve a 4+2 cycloaddition to yield a 6-membered cycle. Another preferred diol (b) is 1,4-butanediol. A combination of both fatty alcohol dimer and 1,4-butanediol is also preferred.

Dimers of fatty alcohols are commercially available, for example, from Croda (The Netherlands) under the trade name PRIPOL 2033. This compound has high purity, is fully hydrogenated, and is a distilled aliphatic dimer alcohol. This product appears as colorless to lightly colored, clear viscous liquid. Preferred properties of this compound can be summarized as follows:

| Dimer % | ≥98% |
|---------|------|
| Hydroxyl value | 202-212mg KOH/g |
| Acid Value | ≤0.2mg KOH/g |

A partially hydrogenated dimer of fatty alcohol can be obtained for instance from Nanjing Hongbaoli Co., Ltd (China).

In another preferred embodiment in combination with any of the above or below embodiments, the dimer of fatty alcohol used for the polycondensation is fully hydrogenated.

**Ethylenically unsaturated dicarboxylic acid (c):**

In principle, any ethylenically unsaturated dicarboxylic acid can be used as component (c), which is capable of undergoing polycondensation reaction with diol components. Ethylenically unsaturated dicarboxylic acid (c) is preferably selected from the compounds characterized by the following general formula (III):

$$R^cOOC-R^7-COOR^d \qquad (III)$$

wherein $R^7$ is selected from $C_{1-10}$ alkylene, $C_{2-10}$ alkenylene, and $C_{3-10}$ alkynylene. Each of these groups may be unsubstituted or substituted by 1-3 substituents, wherein said substituents are preferably selected from $C_{1-8}$ alkyl, $C_{1-8}$ alkenyl, $C_{2-8}$ alkynyl, $C_{1-6}$ alkoxy, and $-R^8-COOR^9$ wherein $R^7$ and/or at least one of its substituents is selected such that one or more carbon-carbon double bonds is/are present in the part of the molecule formed by $R^7$ and its substituents, wherein such carbon-carbon double bond(s) may also be formed between a carbon atom of $R^7$ and the carbon atom of the substituent, which is covalently bonded to said carbon atom of $R^7$. $R^8$ is $C_{1-3}$ alkylene, $C_{2-3}$ alkenylene or $C_{2-3}$ alkynylene and $R^9$ is $C_{1-6}$ alkyl. Each of $R^c$ and $R^d$ is independently selected from hydrogen and alkyl groups having 1 to 8 carbon atoms. The one or more carbon-carbon double bonds may each independently have cis or trans (Z or E) stereochemistry.

In a preferred embodiment, $R^7$ is selected from $C_{2-4}$ alkylene, $C_{2-4}$ alkenylene, and $C_{2-4}$ alkynylene. Each of these groups may be unsubstituted or substituted by 1-3 substituents, wherein said substituents are preferably selected from $C_{1-3}$ alkyl, $C_{1-3}$ alkenyl, $C_{2-3}$ alkynyl, $C_{1-4}$ alkoxy, and $-R^8$-COOR$^9$ wherein such carbon-carbon double bond may also be formed between a carbon atom of $R^7$ and the carbon atom of the substituent, which is covalently bonded to said carbon atom of $R^7$. $R^8$ is $C_{1-3}$ alkylene, $C_{1-3}$ alkenylene or $C_{2-3}$ alkynylene and $R^9$ is $C_{1-4}$ alkyl. Each of $R^c$ and $R^d$ is independently selected from hydrogen and alkyl groups having 1 to 8 carbon atoms.

According to another preferred embodiment, the ethylenically unsaturated dicarboxylic acid (c) is represented by general formula (IIIa):

$$R^cOOC-R^{10}-R^{11}-R^{12}-COOR^d \qquad (IIIa)$$

wherein $R^c$ and $R^d$ are defined as above for formula (III) and wherein $R^{10}$, $R^{11}$ and $R^{12}$ are each independently selected from the group consisting of a covalent bond, $-(CR^eR^f)_m-$, $-C(R^e)=C(R^f)$-and $-C(=CR^eR^f)-$, wherein $R^e$ and $R^f$ are each independently selected from $C_{1-4}$ alkyl, $C_{2-4}$ alkenyl, $C_{2-4}$ alkynyl, $C_{1-4}$ alkoxy, and $-R^{13}$-COOR$^{14}$, m represents an number of from 1 to 3, $R^{13}$ represents $C_{1-3}$ alkylene, $C_{2-3}$ alkenylene or $C_{2-3}$ alkynylene and $R^{14}$ represents $C_{1-4}$ alkyl, with the proviso that at least one of $R^{10}$, $R^{11}$ and $R^{12}$ represents a group selected from $-C(R^e)=C(R^f)-$ and $-C(=CR^eR^f)-$.

Particularly preferred compounds (c) are selected from the group consisting of fumaric acid, maleic acid, itaconic acid, citraconic acid mesaconic acid and aconitic acid, and/or their respective $C_{1-8}$dialkyl esters and most preferably the $C_{1-4}$dialkyl esters.

One or more ethylenically unsaturated dicarboxylic acid (c) may be used either singly or in combination.

## Optional further components (d):

Further optional components may for instance be compounds containing one or more hydroxyl groups and one or more carboxyl groups. Bifunctional compounds of this type such as lactic acid could serve to replace simultaneously dicarboxylic acid compounds (a) and diol compounds (b). Compounds having more than two functional groups could have the same effect of replacing both components (a) and (b) and, additionally, they could also be used to introduce branching into the polycondensate. Typical compounds of this type are citric acid and citric acid ester.

Branching may also be introduced using optional components (d) that have three or more functional groups of the same type. Typical representatives of this class of optional components (d) are glycerol and pentaerythritol.

Another group of optional further components is the group of polyalkylene glycols including especially polyethylene glycol (PEG), poly(tetramethylene ether)glycol (PTMEG), and polypropylene glycol (PPG). *The polyalkylene glycol for use as optional further component (d) in the present invention has a weight average molecular weight of 2000 g/mol or less. It is preferably characterized by the following general formula* (IV):

$$H-(O-R^{15})_{n1}-OH \qquad (IV)$$

wherein $R^{15}$ represents an alkylene group having between 2 and 4 carbon atoms, including especially ethylene groups ($-CH_2-CH_2-$), propylene groups ($-CH_2-CH_2-CH_2-$), methyl-substituted ethylene ($-CH(Me)-CH_2-$, wherein Me represents a methyl group), tetramethylene ($-CH_2-CH_2-CH_2-CH_2-$), methyl-substituted propylene ($-CH(Me)-CH_2-CH_2-$ or $-CH_2-CH(Me)-CH_2-$), dimethyl-substituted ethylene ($-CH(Me)-CH(Me)-$ or $-C(Me)_2-CH_2-$) or mixtures thereof, with ethylene groups being preferred (polyethylene glycol, PEG); and wherein n1 is an average value and it is >1.Preferably, n1 is in the range of from 2 to 35, more preferably from 3 to 27, even more preferably from 4 to 23 and most preferably from 4 to 15. For the preferred embodiment of PEG, this means that the preferred weight-average molecular weight of component (c) is from 100 to 1500 g/mol, more preferably 150 to 1200 g/mol, even more 180 to 1000 g/mol and most preferably from 190 to 650 g/mol. Particularly preferred is the use of any one of the commercially available products PEG 200, PEG 400, PEG 600, PEG 800, PEG 1000 and PEG 1500 and any mixtures thereof. It is also possible to use different grades of the product, including industrial grade products and highly pure analytical grade products.

When using polyalkylene oxides other than PEG, the average number of repeating units should be the same. Hence, the molecular weight ranges and preferred molecular weight ranges given for PEG may be adapted accordingly, taking the differences in molecular weight of each repeating unit into account.

Yet further optional components may be higher aggregates, such as trimers or oligomers, that may be formed in the course of the above-mentioned dimerization reactions yielding dimers of fatty acids and dimers of fatty alcohols.

For the avoidance of doubt, if a component could possibly be understood to fall within the scope of two or more of the above categories (a), (b), (c) and (d), for the purpose of defining the present invention, it shall belong solely to the category mentioned earlier in the above list. For instance, some ethylenically unsaturated compounds with more than two carboxylic acid or ester groups are covered already by the definition of the above component (c). These compounds must therefore not be regarded as components (d) but only as components (c).

**Compositional ratios:**

In a preferred embodiment in combination with any of the above or below embodiments, the molar ratio of component diol (or combination of diols) (b) to component dicarboxylic acid (or combination of dicarboxylic acids) (a) and (c) is from 2:1 to 1:2, more preferably from 1.3:1 to 1:1.3.

It is even more preferred to use a ratio of diol components to dicarboxylic acid components (a) and (c) such that the molar ratio of diols (b) to dicarboxylic acid (a) and (c) is either in the range of from 0.83 to 0.97 or in the range of from 1.03 to 1.17. An excess of diol component or dicarboxylic acid component results in polycondensate having a lower molecular weight and high hydroxyl or carboxylic acid functional groups respectively.

In a preferred embodiment in combination with any of the above or below embodiments, the molar ratio of component dicarboxylic acid (a) to ethylenically unsaturated dicarboxylic acid (c) is from 1:9 to 9:1, more preferably from 1:3 to 3:1.

In a preferred embodiment in combination with any of the above or below embodiments, the optional further component (d) is present in a concentration of 1 mol% to 60 mol% and preferably below 25 mol% relative to the total molar amount of the monomers (a)+(b)+(c)+(d) of the feed composition for making the polycondensate. If optional component (d) is present, the molar amounts of hydroxyl groups and/or carboxyl groups contained in component (d) are also to be taken into account such that the above ratios are applied in the following manner:

The molar ratio of hydroxyl groups derived from component diol (or combination of diols) (b) and component (d) to the molar amount of carboxyl groups derived from the dicarboxylic acid (or combination of dicarboxylic acids) components (a), (c) and (d) is from 2:1 to 1:2, more preferably from 1.3:1 to 1:1.3 and even more preferably in the range of from 0.83 to 0.97 or in the range of from 1.03 to 1.175.

**Preferred Monomer Combinations**

It is a specific preferred embodiment to form polycondensate (A) from a combination of of preferred monomers, including especially the following combinations:

The combination of dicarboxylic acids according to general formula (I) together with the diols of general formula (II), the ethylenically unsaturated dicarboxylic acids of general formula (III) and optionally further components (d).

The combination of preferred dicarboxylic acids according to general formula (I) together with the preferred diols of general formula (II), the preferred ethylenically unsaturated dicarboxylic acids of general formula (III) and optionally preferred further components (d).

The combination of dicarboxylic acids according to general formula (I) which are dimers of fatty acids together with the diols of general formula (II) which are dimers of fatty alcohols, the ethylenically unsaturated dicarboxylic acids of general formula (IIIa) and optionally preferred further components (d).

Any other combination of monomers that are characterized in the present application as being preferred, more preferred and the like.

*5.2.2 Polycondensation*

It is preferred to carry out the polycondensation without solvent, *i.e.* as a bulk condensation. The stirring speed is preferably in the range of from 120 to 250 rpm, more preferably 150 to 220 rpm. The reaction mixture is preferably heated to a temperature of 160 to 210°C, more preferably 170°C to 200°C. Due to the volatile nature of compound (c), the polycondensation is first carried out at normal pressure under a nitrogen stream for 3 to 30 hours, preferably 7 to 20, and then vacuum is applied. It is particularly preferred to carry out second part of the polycondensation in two stages, wherein the first stage involves a polycondensation at a lower vacuum of about 7-13 mbar and a temperature of about 140 to 180°C, and wherein the second stage involves polycondensation at a higher vacuum of about 2-8 mbar and a temperature of about 180-210°C. It is further preferred that the first stage has a duration of 1-3 hours and the second stage has a duration of 2-5 hours. The experimental details given in this section have been optimized for laboratory scale processes. If the process is to be carried out at a larger (e.g. industrial scale), its process parameters need to be adjusted in an appropriate manner. Upscaling of chemical processes can be done by a chemical engineer relying on common general knowledge and routine optimization.

In a preferred embodiment in combination with any of the above or below embodiments the polycondensation is performed in presence of a catalyst. Catalysts that may be used for the polycondensation process are well known in the art.

In another preferred embodiment in combination with any of the above or below embodiments, the esterification catalyst is selected from the group consisting of salts and oxides of Li, Ca, Mg, Mn, Zn, Pb, Sb, Sn, Ge, and Ti, and their glycol adducts, more preferably acetate salts of Li, Ca, Mg, Mn, Zn, Pb, Sb, Sn, Ge, and Ti, and Ti alkoxides, even more preferably titanium(IV) *n*-butoxide, tin(II) octoate, butyl tin chloride dihydroxide, manganese acetate, or zinc acetate, in particular titanium(IV) *n*-butoxide.

In a preferred embodiment in combination with any of the above or below embodiments, the polymerization catalyst is used in a concentration of 0.001 to 2 wt%, more preferably 0.005 to 0.5 wt%, in particular about 0.02 wt% (with respect to the total weight of monomers (a) to (d) in the feed composition). It is preferred to employ the lowest possible amount of catalyst that yields a satisfactory yield at an acceptable reaction time. Using more catalyst than necessary will lead to darker polycondensates. The minimum required amount of catalyst can be determined by systematic routine optimization procedures.

In a more preferred embodiment the polymerization is performed in presence of titanium(IV) n-butoxide as catalyst. More preferably, the catalyst titanium(IV) *n*-butoxide is present at concentration comprised between 0.001 wt% to 1 wt% with respect to the weight of dicarboxylic acid.

In a preferred embodiment in combination with any of the above or below embodiments, the catalyst is added at the beginning of the reaction. In another preferred embodiment in combination with any of the above or below embodiments, the catalyst is added one or more times to the reaction mixture during the reaction period.

In a preferred embodiment in combination with any of the above or below embodiments, the polycondensation reaction is conducted in the presence of a radical inhibitor to prevent reaction of the ethylenic insaturations during the polyester formation. Inhibitors that may be used for this purpose are well known in the art.

In another preferred embodiment in combination with any of the above or below embodiments, the inhibitor is selected from the group consisting of hydroquinone, 4-methoxyphenol (also known as monomethyl ether hydroquinone or MEHQ), 2-methylhydroquinone, benzoquinone or 2-methylbenzoquinone.

In a preferred embodiment in combination with any of the above or below embodiments, the inhibitor is added simultaneously with the ethylenically unsaturated dicarboxylic acid (c).

In a preferred embodiment in combination with any of the above or below embodiments, the radical inhibitor is used in a concentration of 5 to 800 ppm, more preferably 50 to 300 ppm (with respect to the total monomer weight in the feed composition).

### 5.2.3 Molecular Weight and Molecular Weight distribution

The polycondensate (A) is typically characterized by a molecular weight of from 20,000 to 100,000 g/mol, preferably from 20,000 to 95,000 g/mol and even more preferably from 25,000 to 90,000 g/mol. It is furthermore preferable that the polycondensate (A) exhibits a molecular weight distribution Mw/Mn of from 1.00 to 3.5, preferably from 1.4 to 3.0 and even more preferably from 1.5 to 2.8.

If the desired molecular weight cannot be reached by direct polycondensation, the molecular weight of the polymer can be increased *via* chain extension reaction. Suitable compounds for the chain extension for OH terminated polycondensate are difunctional isocyanate compounds such as hexamethylene 1,6-diisocyanate, toluene diisocyanate, m-phenylene diisocyanate, p-phenylene diisocyanate, xylylene diisocyanate, 4,4'-diphenyl methane diisocyanate, 2,4'-diphenyl methane diisocyanate, 2,2'-diphenyl methane diisocyanate, hexamethylene diisocyanate, isophorone diisocyanate, polymethylenepolyphenyl diisocyanate, 3,3'-dimethyl-4,4'-biphenylene diisocyanate, 3,3'-dimethyl-4,4'-diphenylmethane diisocyanate, 3,3-dichloro-4,4'-biphenylene diisocyanate or 1,5-naphthalene diisocyanate. For carboxyl-terminated polycondensates, carbodiimides are suitable for use as chain extenders. A suitable composition containing a difunctional carbodiimide that may be used for chain extension purpose is commercially available from BASF (Germany) under the trademark Lupranate.

In a preferred embodiment in combination with any of the above or below embodiments, the chain extension reaction is performed in presence of heat and/or a catalyst. Catalysts that may be used for the polycondensation process are well known in the art.

The preferred concentration range for chain extension agents is from 3 to 12 mol% and more preferably 3 to 9 mol% (with respect to polycondensate molar amount). Chain extension using chain extension agents can be performed by mixing the polycondensate and chain extension agent optionally in presence of a catalyst and/or in the optional presence of heat. Catalysts suitable for use in this reaction are well-known to the person skilled in the art. They include especially zirconium (IV) acetylacetonate, which is preferably used at a concentration from 0.001 to 2 wt% and most preferably 0.01 to 0.1 wt% (with respect to polycondensate weight).

### 5.2.4 Further Properties

The polycondensate (A) is preferably characterized by one or more of the following further properties:

- α transition temperature below 0°C, preferably from -80°C to -20°C, even more preferably from -60°C to -45°C.

For polycondensate having a molar ratio of diols (b) to dicarboxylic acid (a) and (c) is in the range of from 1.03 to 1.17 (*i.e.* hydroxyl terminated polycondensate):

- acid value (expressed in mg KOH/g polymer) from 0.1 to 150, preferably from 1 to 20, even more preferably from 0.1 to 1.
- hydroxyl value (expressed in mg KOH/g polymer) from 1 to 150, preferably from 1 to 50, even more preferably from 15 to 25.

For polycondensate having a molar ratio of diols (b) to dicarboxylic acid (a) and (c) is in the range of from 0.83 to 0.97 (*i.e.* carboxylic acid terminated polycondensate):

- acid value (expressed in mg KOH/g polymer) from 1 to 150, preferably from 1 to 80, even more preferably from 5 to 40.
- hydroxyl value (expressed in mg KOH/g polymer) from 0.1 to 150, preferably from 0.1 to 50, even more preferably from 0.1 to 15.

### 5.3 Adhesive and adhesive preparation

### 5.3.1 Overview

The adhesive of the present invention is a composition comprising the above polycondensate (A) in a cross-linked form together with a radical initiator and one or more optional components such as an oil additive. Further optional components may be present as long as these do not prevent accomplishing the beneficial effects of the present invention.
The adhesion level of the adhesives in accordance with the present invention may be reduced by initiating a post-curing reaction. The degree of reduction of the adhesion level by the post-curing reaction may be easily modified by varying the concentration of cross-linkable ethylenically unsaturated dicarboxylic acid units in the polycondensate A, and/or varying the degree of curing and post-curing of the adhesive. Hence, the adhesives of the present invention are suitable for a wide range of potential applications.

### 5.3.2 Cross-linking agent AB

In a preferred embodiment in combination with any of the above or below embodiments, the cross-linking agent has at least 2 functional groups selected from the group consisting of an isocyanate, an epoxide, an anhydride, maleimide, a carbodiimide and any combinations thereof. Among these groups of cross-linking agents, it is advantageous to use the isocyanate-based cross-linkers, the epoxide-based cross-linkers, the anhydride-based cross-linkers and/or the maleimide-based cross-linkers for the cross-linking of OH-terminated polycondensates. It is furthermore advantageous to use the epoxy-based cross-linkers and/or the carbodiimide-based cross-linkers for the cross-linking of carboxyl-terminated polycondensates.
In a preferred embodiment in combination with any of the above or below embodiments, the cross-linking agent has a structure $R-(N=C=O)_n$, wherein R is an aliphatic, alicyclic or aromatic residue, and n is an integer $\geq 2$. In a preferred embodiment in combination with any of the above or below embodiments, R is an aliphatic, alicyclic or aromatic residue containing from 10 to 40 carbon atoms. In a preferred embodiment in combination with any of the above or below embodiments, n is an integer of 2, 3, 4, 5 or 6, more preferably of 2, 3 or 4, in particular 3.
In another preferred embodiment in combination with any of the above or below embodiments, in combination with any of the above or below embodiments, the cross-linking agent is selected from the group consisting of trimerized isocyanates, more preferably trimerized aliphatic isocyanates, and any combination thereof. In another preferred embodiment in combination with any of the above or below embodiments, b) is selected from the group consisting of trimerized derivatives of MDI [4,4-methylene-di(phenyl isocyanate)], HDI [hexamethylene diisocyanate, 1,6-hexylene diisocyanate], IPDI [isophorone diisocyanate, 5-isocyanato-1-isocyanatomethyl-1,3,3-trimethylcyclohexane], and any combination thereof.
In another preferred embodiment in combination with any of the above or below embodiments, the cross-linking agent is selected from the group consisting of Desmodur VL 50 (MDI-based polyisocyanates, Bayer AG), Basonat F200WD (aliphatic polyisocyanate, BASF AG), Desmodur® grades N3600 and XP2410 (each from BAYER AG: aliphatic polyisocyanates, low-viscosity HDI trimers), the trimer of isophorone diisocyanate (Vestagon B 1530), modified compounds thereof such as uretonimine-modified compounds thereof, and any combination thereof.

In a preferred embodiment in combination with any of the above or below embodiments, the cross-linking agent has at least 2 epoxy functional groups. In another preferred embodiment in combination with any of the above or below embodiments, b) is selected from the group consisting of a dimeric, oligomeric and polymeric epoxy materials containing at least 2 epoxy functional groups, and any combination thereof.

In another preferred embodiment in combination with any of the above or below embodiments, the cross-linking agent is selected from the group consisting of glycidyl esters. In another preferred embodiment in combination with any of the above or below embodiments, b) is the reaction product of epichlorohydrin and p-amino phenol. In another preferred embodiment in combination with any of the above or below embodiments, b) is the reaction product of bisphenol A and epichlorohydrin, more preferably selected from the group consisting of Ciba Geigy Araldite™ 6010, Dow Chemical DER™ 331, and Shell Chemical Epon™ 825, 828, 826, 830, 834, 836, 1001, 1004, 1007.

In another preferred embodiment in combination with any of the above or below embodiments, the cross-linking agent is the reaction product of phenol and formaldehyde (novolac resin) and epichlorohydrin, more preferably wherein the novolac resin is selected from the group consisting of DEN™ 431 and 438 from Dow Chemical, CY-281™ from Ciba Geigy (polyepoxidized phenol formaldehyde novolac prepolymer), ECN™ 1285, 1280 and 1299 from Ciba Geigy (polyepoxidized cresol formaldehyde novolac prepolymer).

In another preferred embodiment in combination with any of the above or below embodiments, the cross-linking agent is a polyglycidyl ether of polyhydric alcohol, more preferably wherein the polyhydric alcohol is butane-1,4-diol (available under the trade-name Araldite™ RD-2 from Ciba Geigy) or glycerine (available under the trade-name Epon™ 812 from Shell Chemical).

In another preferred embodiment in combination with any of the above or below embodiments, the cross-linking agent is a flexible epoxy resin, more preferably selected from polyglycol diepoxies (available under the trade-name DER™ 732 and 736, from Dow Chemical Company), and a diglycidyl ester of linoleic dimer acid (available under the trade-name Epon™ 871 and 872, from Shell Chemical Company).

In another preferred embodiment in combination with any of the above or below embodiments, the cross-linking agent is an epoxy resin having more than two functional groups, more preferably selected from the group consisting of triglycidyl isocyanurate (TGIC), N,N,N',N'-tetrakis(2-hydroxyethyl)adipamide (e.g. Primid XL 552), tetraglycidyl meta-xylenediamine (such as Erisys GA-240 from Emerald Performance Materials), a triglycidylether of p-aminophenol (e.g. Araldite™ 0500/0510 from Ciba-Geigy Corporation), N,N,N',N',-tetraglycidyl-a,a'-bis(4-aminophenyl)-p-diisopropyl-benzene, diglycidyl ether of bisphenol-9-fluorene, and N,N,N',N'-tetraglycidyl-4,4'-methylenebis-benzenamine (e.g. Araldite™ 720 from Ciba Corporation).

In another preferred embodiment in combination with any of the above or below embodiments, the cross-linking agent is an epoxidized triglyceride, more preferably an epoxidized triglyceride of a natural oil, in particular wherein the natural oil is selected from the group consisting of linseed oil, soybean oil, castor oil, palm kernel oil, sunflower oil, corn oil, cottonseed oil, perilla oil, rapeseed oil, olive oil, canola oil, palm oil, coconut oil, rice bran oil, safflower oil, sesame oil, tall oil, and any combination thereof. In another preferred embodiment in combination with any of the above or below embodiments the number of epoxy groups in the epoxidized fatty acid ester is 2, 3, 4, 5 or 6, more preferably 3, 4 or 5.

Triglycerides are the main component of natural oils and are composed of three fatty acid groups connected by a glycerol centre. Epoxidized triglycerides can be found as such in nature, for instance in Vernonia plants, or can be conveniently synthesized from more common unsaturated oils by using a standard epoxidation process.

Epoxidized triglycerides are also commercially available. For example, epoxidized linseed oil (ELO) is available from Cognis (Düsseldorf, Germany) under the trade name DEHYSOL B316 SPEZIAL, or Arkema (King of Prussia, Pennsylvania) under the trade name VIKOFLEX 7190. Epoxidized soybean oil (ESBO) is commercially available from Cognis (Düsseldorf, Germany) under the trade name DEHYSOL D82, or from Arkema (King of Prussia, Pennsylvania) under the trade name VIKOFLEX 7170.

In a preferred embodiment in combination with any of the above or below embodiments, the cross-linking agent has at least 2 anhydride functional groups. In another preferred embodiment in combination with any of the above or below embodiments, b) is selected from the group consisting of a dimeric, oligomeric and polymeric anhydride materials containing at least 2 anhydride functional groups, and any combination thereof. In another preferred embodiment in combination with any of the above or below embodiments, b) is selected from the group consisting of pyromellitic dianhydride (PMDA), 3,3',4,4'-oxydiphthalic dianhydride (ODPA), 3,3',4,4'-benzophenone tetracarboxylic dianhydride (BTDA), 3,3',4,4'-biphenyltetracarboxylic dianhydride, 1,2,3,4-cyclobutanetetracarboxylic dianhydride, 4,4'-diphthalic (hexafluoroisopropylidene) anhydride (6FDA), benzoquinonetetracarboxylic dianhydride, and ethylenetetracarboxylic dianhydride.

In another preferred embodiment in combination with any of the above or below embodiments, the cross-linking agent is a maleimide compound, more preferably N,N'-m-phenylene bismaleimide, bis(maleimido)ethane, 1.4-bis(maleimido)butane, or bis(maleimido)hexane

In another preferred embodiment in combination with any of the above or below embodiments, the cross-linking agent is a carbodiimide crosslinker. Suitable carbodiimide crosslinkers are commercially available, for instance, from RheinChemie (Product name Stabaxol) and Picassian polymers (Product name Picassian XL-725). Suitable carbodiimide crosslinker are furthermore described in US 2013/0144006 A1 and especially in paragraph 89 thereof.

### 5.3.3 Oil additive (B)

The adhesive of the present invention may contain an oil additive (B). Said oil additive may be selected from any natural or synthetic, organic or mineral oil. The oil additive may also be selected from the group of softeners and plasticizers employed in polymer industry.. In a preferred embodiment the oil additive is colorless, and its viscosity is lower than that of the polycondensate. It is also preferred that the polycondensate is fully soluble in the oil additive or in the mixture of the oil additive and an organic solvent.

In a preferred embodiment in combination with any of the above or below embodiments, the adhesive contains the oil additive at a concentration from 1 wt% to 150 wt% more preferably 50 wt% to 100 wt%, relative to the polycondensate before crosslinking.

In another preferred embodiment in combination with any of the above or below embodiments, the oil additive is bio-based.

The oil additive can for instance be one or more oils selected from the following list, but it is not limited thereto: sorbitan mono- or di-esters of fatty acids such as sorbitan ester of oleic acid, oleate esters, soybean oil, citrate ester, vernonia oil, PEG (Mw 100-1000) and PEG derivatives such as PEG ether (such as dimethyl PEG) or-PEG esters such as PEG distearate, fatty acids such as myristic acid, palmitic acid, stearic acid, lauric acid, oleic acid, isostearic acid, neodecanoic acid, trimethylhexanoic acid and neoheptanoic acid; the esters of these fatty acids such as isopropyl myristate; fatty alcohols such as myristyl alcohol, cetyl alcohol, oleyl alcohol and lauryl alcohol; aliphatic pyrrolidones such as $N$-lauryl-2-pyrrolidone; terpenes such as 1-menthol, d-limonene and $\alpha$-terpineol; alkanes such as heptane, octane, nonane and decane; and substances acting as solubilizers and transdermal absorption promoters of medicinal ingredients such as crotamiton and $\alpha$-, $\beta$- and $\gamma$-cyclodextrin. Besides, mention may be made of substances for use as fragrant/refreshing materials such as L-menthol, camphor, thymol, mint oil, castor oil, fennel oil, star anise oil, cinnamon oil, oil of cloves, thiamine oil, turpentine oil, eucalyptus oil, lavender oil, lemon oil, orange oil, bergamot oil and rose oil. Additionally, fatty acid esters of monovalent alcohols such as cetyl octanoate, hexyl laurate, isopropyl myristate, isopropyl palmitate, butyl stearate, myristyl lactate, and the like; dibasic acid esters such as dioctyl adipate, diethyl sebacate, dioctyl sebacate, dioctyl succinate, and the like; fatty acid esters of polyvalent alcohols and the like such as propylene glycol dicaprate, glycerol trioctanoate, glycerol tri(octanoate/decanoate), medium chain fatty acid triglyceride, and the like; and in particular, isopropyl myristate, isopropyl palmitate, diethyl sebacate, middle chain fatty acid triglyceride, and the like are preferably used. Further examples of the oil additive include glycols such as ethylene glycol, diethylene glycol, propylene glycol, dipropylene glycol, tripropylene glycol, triethylene glycol, poly(propylene glycol) and the like; fats and oils such as olive oil, castor oil and the like; lanolin; hydrocarbons such as squalane and liquid paraffin; various surfactants; ethoxylated stearyl alcohol; glycerol monoesters such as oleic acid monoglyceride, caprylic acid monoglyceride and lauryl acid monoglyceride; dialkyl ester of polyalkylene glycol such as poly(propylene glycol); glycerol diester such as glycerol diacetate and the like, glycerol triester such as glycerol triacetate and the like, or a mixture thereof; fatty acid alkyl ester such as triethyl citrate and the like; long chain alcohol; higher fatty acid such as oleic acid and caprylic acid; alkyl ester of higher fatty acid such as isopropyl myristate; pyrrolidones such as N-methylpyrrolidone and N-dodecylpyrrolidone; sulfoxides such as decyl methyl sulfoxide; 1,3-butanediol and the like. All of the above oil additives can be used alone or in a mixture of two or more kinds thereof.

In another preferred embodiment in combination with any of the above or below embodiments, the oil additive is a isosorbide ester (monoester or diester) or a mixture of two or more isosorbide esters, each of which being selected from isosorbide monoesters or isosorbide diesters. The isosorbide diester employed can be both symmetrical or asymmetrical. Preferably, isosorbide is esterified with one or two fatty acids, both being independently selected from C6-18 saturated or unsaturated fatty acids, more preferably $C_{8-12}$ saturated or unsaturated fatty acids. Isosorbide dicaprylate is commercially available from Sytheon under the trade mark Synovea® DOI. A mixture of isosorbide diesters is commercially available under the trade mark POLYSORB ID 37 (Roquette Frères, France). As an alternative to esters of isosorbide, it is also possible to employ the esters of stereoisomers of isosorbide, namely esters of isomannide or isoidide. However, it is more preferably to employ isosorbide due to its commercial availability and low cost.

Among the above-mentioned oil components, it is particularly preferred to employ one or more oil components selected from the group of sorbitan mono- or di-esters of fatty acids, PEG diesters, sesame oil, POLYSORB ID37, sorbitol mono- and diesters as well as isopropyl myristate.

### 5.3.4 Tackifier (C)

In a preferred embodiment in combination with any of the above or below embodiments, the composition of the invention or adhesive contains a tackifier agent or tack enhancer agent or a combination of two or more of such agents (hereinafter jointly referred to as "tackifier"). If present, the tackifier is preferably present at a concentration from 0.1 wt% to 30 wt% more preferably 1 wt% to 5 wt%, relative to the weight of the polycondensate.

In another preferred embodiment in combination with any of the above or below embodiments, the tackifier agent is bio-based.

The tackifier can for instance be rosin or a rosin derivative, but it is not limited to this type of substances. The tackifier is preferentially selected from the group consisting of rosins and their derivates (abietic acid, abietic acid esters), terpenes and their derivatives (polyterpene resins, terpene-phenol resins), aliphatic, cycloaliphatic and aromatic resins ($C_5$ aliphatic resins, $C_9$ aromatic resins, and $C_5/C_9$ aliphatic/aromatic resins), hydrogenated hydrocarbon resins, and their mixtures.

Suitable rosin derivatives are for instance:

- Esterified hydrogenated rosin such as: Foralyn 90, Foralyn 110, Foralyn 5020-F (EASTMAN).
- Ester of tall oil rosin such as: Sylvalite RE 105XL (Arizona Chemical - The Netherlands).

### 5.3.5 Ethylenically unsaturated additive (D)

In a preferred embodiment in combination with any of the above or below embodiments, an ethylenically unsaturated additive D is added to the polycondensate A after the polycondensation has been completed. Such additive can be used to adjust the viscosity of the adhesive composition, to facilitate the coating step or enhance/adjust the debonding process.

The term "ethylenically unsaturated additive" as used herein refers to low molecular weight compounds having an ethylenically unsaturated compound that could be co-polymerised with the ethylenically unsaturated dicarboxylic acid units of the polycondensate A during the curing step of the adhesive. The term "low molecular weight", as used herein, denotes a molecular weight of less than 2,000 g/mol, preferably less than 500 g/mol, more preferably less than 300 g/mol. The most preferred reactive diluents belong to the class of mono-functional acrylic esters or methacrylic esters, where the alkyl segment is a saturated, unsaturated or aromatic hydrocarbon chain which is linear, branched or cyclic. In a preferred embodiment in combination with any of the above or below embodiments, the alkyl chain of the (meth)acrylic acid ester has from 3 to 18 carbon atoms, *i.e.* 3, 4, 5, 6, 7, 8, 9,10,11,12,13,14,15,16,17 or 18 carbon atoms, more preferably from 2 to 8 carbon atoms, *i.e.* 2, 3, 4, 5, 6, 7 or 8 carbon atoms. In another preferred embodiment in combination with any of the above or below embodiments, the ethylenically unsaturated additive is at least partially derived from renewable sources, in particular, selected from the group consisting of *n*-butyl acrylate, 2-ethylhexyl acrylate, or *n*-octyl acrylate.

In a preferred embodiment, in combination with any of the above or below embodiments, the ethylenically unsaturated additive D is present in a concentration of 1 wt% to 80 wt%, preferably in a concentration of 5 wt% to 30 wt%, based on the polycondensate A representing 100 wt%.

### 5.3.6 Radical Initiator E

Debonding is carried out in the present invention by inducing a polymerization reaction of the ethylenically unsaturated bonds of polycondensate A and ethylenically unsaturated additive D, if this is also present. Said polymerization reaction may be induced by photochemically, thermally and/or chemically induced radical generation.

Independently of the type of radical initiator used, it is preferable to use the radical initiator in an amount of from 0.001 to 10 wt%, more preferably from 0.5 to 2 wt% based on the weight of the polycondensate A.

In a preferred embodiment, in combination with any of the above or below embodiments, a photo-initiating system can be used. This can be a photo-initiator as such, or a mixture of photo-initiators, and can be chosen from the large numbers of photo-initiating systems known by the person skilled in the art. Suitable photo-initiators that create free radicals upon irradiation with light of respective wavelength are a preferred group of catalysts. Preferably, the photo-initiator is selected from the group consisting of diacyl peroxides, dialkylperoxidicarbonates, tert-alkyl peroxyesters, di-tert-alkyl peroxides, teralkylhydroperoxides, ketone peroxides, and mixtures thereof. Examples of suitable photoinitiators include the compounds manufactured by Ciba, Switzerland under the trade names Darocur® and Irgacure®. Such initiator compounds are usually added to the composition in small amounts, for example, 0.1 wt% to 10 wt%, preferably from 0.5 wt% to 2 wt%, relative to the polycondensate A weight. The absorption characteristics of the photo-initiator are not particularly limited. It is possible to freely choose a photo-initiator or a mixture of photo-initiators having absorbance characteristics that match the intended type of debonding irradiation. If the adhesive composition contains an optional component that has a strong absorbance in UV, a photoinitiator with different wavelength absorbance profile should be selected. This comment is valid for all optional components that can be used in connection with the present invention.

In another preferred embodiment, in combination with any of the above or below embodiments, the photo-initiating system used to debond the adhesive is composed of a mixture of photoinitiator compounds having different absorbance spectra.

In another embodiment, the adhesive is post-cured by a thermally-initiated process. The thermal initiator can be selected from azo compounds like for example azoisobutyronitril (AIBN), C-C labile compounds like for example benzopinacole, peroxides, and mixture thereof. It is important to select the thermal initiator such that it only initiates the post-curing (debonding) reaction upon heating to a temperature that is significantly higher than the temperature required for cross-linking. Otherwise, there would be a risk of both reactions taking place at the same time. In the thermal-post-curing method, the composition could contain both an organic solvent and a reactive diluent. Debonding by a thermally initiated process is preferable especially for the non-medical uses of the adhesive compositions of the present invention.

In another preferred embodiment, in combination with any of the above or below embodiments, the adhesive is cured by a redox-initiated process. The redox initiator can be selected from hydroperoxides, peroxycarbonates, peroxyesters, diacylperoxides, or dialkylperoxides. In the redox-curing method, the composition could contain both an organic solvent and a reactive diluent. Debonding by a redox-initiated process is preferable especially for the non-medical uses of the adhesive compositions of the present invention.

### 5.3.7 Optional further components of the adhesive composition

Further components may optionally be present, provided these optional further components do not interfere with the beneficial effects of the invention. Additional components suitable for use in the adhesive of the present invention include the following: moisture regulating agents such as alginates; alginate derivatives and alginate salts (as for instance zinc alginate or silver alginate); starch; cellulose derivatives such as carboxymethyl cellulose (CMC), hydroxyethyl cellulose or acetate cellulose and their salts; gelatine and the like such as agar-agar or pectin; gums (such as xanthan gum, gum arabic, guar gum, locust bean gum); collagen; polysaccharides such as chitosan, hyaluronic acid or hyaluronate derivatives and salts; activated charcoal; as well as components having antibacterial activity such as silver particles/crystal and silver salts such as silver sulfadiazine; sulfated molecules and sulfate rich polymers and iodine derivatives.

In some instances, it may be possible that the above-mentioned optional further components also react with the contemplated cross-linking agent. In such instances, it may be considered to omit the respective optional component or to replace it by a non-reactive component having a similar function. Yet another alternative may be to modify the polycondensate and cross-linking agent. For instance, if the optional component is CMC, there may be some reaction with the cross-linking agents suitable for carboxyl-terminated polycondensates. It may be an option in this case to increase the ratio of diol monomers to dicarboxylic acid monomers so that the resulting polycondensate is OH-terminated. It may then be possible to use a cross-linking agent, which does not react with CMC. Yet another option may be to accept that a reaction between optional further component and cross-linking agent takes place (provided such reaction does not prevent accomplishment of the desired beneficial effects of the present invention). In this case, it will be necessary to suitably adapt the amount of cross-linking agent to account for the loss of agent due to reaction with the optional further component.

Undesired reactions of this type between the optional further components and the chain extension agent can be prevented by adding the optional further component only after the polycondensate has been chain-extended.

In a preferred embodiment in combination with any of the above or below embodiments, the composition or adhesive comprises a filler, more preferably selected from the group consisting of a silicate, talcum, calcium carbonate, clay, carbon black, pigments and pigment pastes, or pulp chopped fibers (preferably selected from the group consisting of kenaf, hemp, flax, jute, sisal, cotton and linen).

If the adhesive composition is intended for use in the medical field, it may furthermore contain one or more optional further components selected from the components mentioned in the CTFA International Cosmetic Ingredient Dictionary and Handbook (2004 and 2008). Examples of these ingredient classes include: one or more skin penetration enhancers (which may be surfactants, alcohols, esters, glycols or the like or any other suitable penetration enhancer), emulsifiers, moisturizers (including, e.g., emollients, humectants, film formers, occlusive agents, and agents that affect the natural moisturisation mechanisms of the skin), skin conditioning agents (e.g., aloe extracts, allantoin, bisabolol, ceramides, dimethicone, hyaluronic acid), anti-irritants (e.g. steroids and non-steroidal anti-inflammatories), anti-microbial agents (e.g. antibiotics, silver), fragrances (artificial and natural), dyes and colour ingredients (e.g., Blue 1, Blue 1 Lake, Red 40, titanium dioxide, D&C blue no. 4, D&C green no. 5, D&C orange no. 4, D&C red no. 17, D&C red no. 33, D&C violet no. 2, D&C yellow no. 10, and D&C yellow no. 11), adsorbents, lubricants, solvents, water-repellents, UV absorbers (physical and chemical absorbers such as paraminobenzoic acid ("PABA") and corresponding PABA derivatives, titanium dioxide, zinc oxide, etc.), essential oils, vitamins (e.g. A, B, C, D, E, and K), trace metals (e.g. zinc, calcium and selenium), botanical extracts (e.g. Aloe vera, chamomile, cucumber extract, Ginkgo biloba, ginseng, and rosemary), antioxidants (e.g., BHT, BHA and tocopherol), chelating agents (e.g., disodium EDTA and tetrasodium EDTA), preservatives (e.g., methylparaben and propylparaben), pH adjusters (e.g., sodium hydroxide and citric acid), absorbents (e.g., aluminum starch octenylsuccinate, kaolin, corn starch, oat starch, cyclodextrin, talcum, and zeolite), skin bleaching and lightening agents (e.g., hydroquinone and niacinamide lactate), humectants (e.g., urea and mannitol), exfoliants, waterproofing agents (e.g., magnesium/aluminum hydroxide stearate, and dipotassium glycyrrhizate) and wound healing agents (e.g., glycosaminoglycans which support epidermal regeneration, such as hyaluronic acid).

A sensitizer may also optionally be contained to improve the radical generation efficiency of a radical initiator, and to increase the range of the photosensitive wavelengths. Preferably, a sensitizer is used, which sensitizes the radical initiator by way of an electron transfer mechanism or energy transfer mechanism is preferred.

Examples of the sensitizer, which may be used in the present invention include the following compounds which have an absorption wavelength in a wavelength region of 300 nm to 450 nm. Examples of the sensitizer include polynuclear aromatics (for example, phenanthrene, anthracene, pyrene, perylene, triphenylene, 9,10-dialkoxyanthracene), xanthenes (for example, fluorescein, eosine, erythrosine, Rhodamine B, rose bengal), thioxanthones (isopropylthioxanthone, diethylthioxanthone, chlorothioxanthone), cyanines (for example, thiacarbocyanine, oxacarbocyanine), merocyanines (for example, merocyanine, carbomerocyanine), phthalocyanines, thiazines (for example, thionine, ethylene blue, toluidine blue), acridines (for example, acridine orange, chloroflavin, acriflavine), anthraquinones (for example, anthraquinone), squaryliums (for example, squarylium), acridine orange, coumarins (for example, 7-diethylamino-4-methylcouinarin), ketocoumarin, phenothiazines, phenazines, styryl benzenes, azo compounds, diphenyl methane, triphenyl methane, distyryl benzenes, carbazoles, porphyrin, spiro compounds, quinacridone, indigo, styryl compounds, pyrylium compounds, pyrromethene compounds, pyrazolotriazole compounds, benzothiazole compounds, barbituric acid derivatives, thiobarbituric acid derivatives, aromatic ketone compounds such as acetophenone, benzophenone, thioxanthone, Michler's ketone, and heterocyclic compounds such as N-aryloxazilidinone or the like.

The content of the sensitizer in the photopolymerizable composition (1) is preferably from 0.1 wt% to 20 wt%, and more preferably from 0.5 wt% to 15 wt% based on the weight of the polycondensate.

The sensitizer may be used alone, or may be used in combination of two or more kinds.

### 5.3.7 Cross-linking reaction and manufacture of adhesive composition

The adhesive composition of the present invention is obtained by crosslinking the polycondensate A described above. In a preferred embodiment, in combination with any of the above or below embodiments, the method for preparing the adhesive composition comprises the steps of:

- Forming a reaction mixture comprising *inter alia* polycondensate A and cross-linker, and
- Subjecting the reaction mixture to conditions suitable for carrying out a cross-linking reaction between polycondensate A and cross-linking agent AB that does not involve the ethylenically unsaturated repeating units contained in the polycondensate A.

The reaction mixture contains:

- polycondensate A

- cross-linking agent AB

- radical initiator E

- optionally further components such as tackifier C.

In a preferred embodiment the crosslinking agent is present at concentration of 0.1 wt% to 30 wt% more preferably 2 wt% to 25 wt%, relative to the weight of polycondensate (A) prior to cross-linking. According to this embodiment, the further components are used in the following amounts (all indications relative to the weight of polycondensate (A) representing 100 wt.%).

- radical initiator: 0.1 to 10 wt%, preferably 0.5-2 wt%.

- optional oil additive, if present: 1 to 150 wt%, preferably 50-10 wt%

- optional tackifier, if present: 0.1 to 30 wt%, preferably 1 to 5 wt%

- optional reactive diluent, if present (D): 5 to 80 wt%, preferably 30 to 70 wt%.

According to a preferred embodiment, all of the above essential and optional components are present in the relative amounts that are marked as preferred.

According to another preferred embodiment in combination with any of the above or below embodiments, two or more and preferably all of the components of the reaction mixture are selected among those components described in the present application as being preferred, more preferred or the like.

Further optional components may be used in any amount as desired, provided the further optional components do not compromise the effects of the invention to a significant extent.

The reaction mixture may be formed by mixing the above-mentioned components. The type of mixing as well as the relative order of addition of the individual components are not particularly limited.

In a preferred embodiment the crosslinking agent, polycondensate, oil additive and optional component(s) are mixed together at the same time to yield the reaction mixture for the crosslinking reaction.

In another preferred embodiment an organic solvent is additionally admixed to the reaction mixture as a further optional component. The organic solvent employed can be aromatic (such as toluene) or non-aromatic (such as ethyl acetate). The relative amount of the organic solvent employed is comprised from 0.1 to 100 weight %, preferably from 5 to 50 weight %, even more preferably from 10 to 30 weight %, (with regard to the polycondensate (A)).

In a preferred embodiment, in combination with any of the above or below embodiments, the method for preparing the adhesive comprises mixing the polycondensate (A) and the non-reactive compound either by:

- Mixing the components of the reaction mixture in bulk (without solvent). In that case heating at a temperature between 40°C to 100°C can be necessary in order to decrease the melt viscosity and ensure good homogenization of the mixture, or
- Mixing of the components of the reaction mixture at room temperature is also possible but could require the addition of an organic solvent and/or of the reactive diluents (D) in order to create a reactive formulation with a suitable viscosity enabling the coating step.

The crosslinking reaction can be started by heating the reaction mixture. Crosslinking reaction temperature can be selected from 25°C to 200°C, preferably from 100°C to 180°C, even more preferably from 120°C to 150°C.

Crosslinking reaction time can be selected from 1 to 600 minutes, preferably from 1 to 20 minutes, even more preferably from 3 to 8 minutes.

It is possible to carry out the cross-linking reaction by heat or using a catalyst or a combination of heat and catalyst. Suitable catalysts are known from the skilled person in the art. For instance, in the case of the isocyanate-hydroxyl group reaction the interested reader can refer to Werner Blank and coworkers in Progress in Organic Coatings 35 (1999) 19-29. A combination of two or more catalysts can also be used.

### 5.3.8 Debonding of the adhesive

The adhesive of the present invention can be debonded *via* post curing reaction on the ethylenically unsaturated repeating units contained along the polymer backbone.

As described above, a suitable radical initiator of the post-curing is dispersed in the adhesive composition prior the initial curing stage in order to enable the debonding reaction. The post-curing is preferably effected at a temperature in the range from -20°C to +200°C and the radical initiator can be a photo-initiator, a thermal initiator and/or a redox initiator.

In a preferred embodiment, in combination with any of the above or below embodiments, the adhesive is post-cured by a process that is initiated by electromagnetic irradiation. Said electromagnetic irradiation may be in any wavelength or range of wavelengths, for which a suitable photoinitiator or system of photoinitiator and sensitizer is available. This may include gamma-rays, X-rays, UV rays as well as visible light.

In the electromagnetic irradiation post-curing method, it is preferred that the composition does not contain any organic solvents.

If the adhesive composition of the present invention contains a thermal initiator or a redox initiator, debonding is effected by heating the adhesive composition to a temperature that is sufficiently high to initiate polymerization of the ethylenically unsaturated bonds in the cross-linked polycondensate and optionally the ethylenically unsaturated additive (D).

If the adhesive composition of the present invention contains a redox initiator, debonding is effected by exposing the adhesive composition to oxidizing or reducing conditions that are suitable to initiate polymerization of the ethylenically unsaturated bonds in the cross-linked polycondensate and optionally the ethylenically unsaturated additive (D).

### 5.3.9 Debonded adhesive

The adhesive characteristics of the inventive composition or adhesive can be decreased by post curing of the adhesive layer. The adhesion differences before and after post-curing can be modulated by multiple manners, such as:

- Varying the concentration of cross-linkable ethylenically unsaturated dicarboxylic acid units in the polycondensate A, and/or
- Varying the crosslinker structure and its concentration, and/or
- Varying the degree of post-curing of the adhesive (for instance by tuning the dose of radiation in the case of UV- or visible light curing or tuning the curing temperature and/or time in the case of a thermal curing event).

Upon debonding, the adhesive peel force of the debonded adhesive is lower than the adhesive peel force of the cured adhesive. Preferably, the peel force is in the range of 0.1 to 60%, more preferably in the range of 1 to 35%, of the peel force before debonding.

Upon debonding, the viscosity of the debonded adhesive is higher than the viscosity of the cured adhesive before debonding. Preferably, the viscosity after debonding is in the range of 110 to 500%, more preferably 125 to 300%, of the viscosity before debonding.

In a preferred embodiment in combination with any of the above or below embodiments, the adhesive gel content value of the cross-linked polycondensate is comprised between 30 % to 95%, most preferably between 40 % to 80%.

### 5.3.10 Manufacture of layered products of the invention

The layered products of the invention may be prepared in the following manner: The method for manufacturing the layered products of the invention is not particularly limited. In a preferred embodiment of practicing the invention, the adhesive composition is formed in situ while manufacturing the layered product of the invention. This procedure includes the following steps: a reaction mixture is formed by mixing the polycondensate A (before curing) with the oil additive (optional), a solvent (optional) or a mixture of solvents (optional), the tackifier (optional), the reactive diluent (optional), the cross-linking agent and the radical initiator as well as any further optional components as described in more detail in Section 5.3.7 above. If the tackifier is a solid, a solution of tackifier in a compatible solvent is preferably used. Once the reaction mixture is homogeneous, the solution is casted on a liner and cured by means of the cross-linking reaction described in Section 5.3.7 above. Care needs to be taken that curing is carried out without initiating a significant degree of the radical polymerization of the ethylenic double bonds described as post-curing or debonding in Section 5.3.8 above. After curing, the "free" side of the adhesive may be laminated onto a semi-finished product, such as a backing, support, protective film or other product, to thereby yield the final product of interest. Alternatively, the "free" side of the adhesive may be simply laminated onto a further liner surface for storage purposes.

It may furthermore be advantageous to mix the polymer initially with oil to decrease the viscosity before adding further ingredients. It is also preferable that the photoinitiator is added just before coating and curing. The tackifier may be added together with the oil or after the oil addition.

### 5.4. Medical Tape and Patch

### 5.4.1 Backing

To prepare a medical tape or patch, the adhesive is laminated on a backing. Suitable backing materials may, for instance, be selected from woven and non-woven materials, wherein preferred woven backing materials are selected from cotton, nylon, rayon or a mixture thereof; and wherein preferred non-woven materials are preferably selected from polyethylene terephthalate (PET), polyethylene (PE), polyurethane (PU), polyvinyl chloride (PVC), polypropylene (PP), wood pulp, cellulose, starch and/or polylactic acid (PLA). It is advisable to choose a backing material that exhibits a high degree of transparency, e.g. above 50%, preferably above 75%, for the wavelength region, which is contemplated for initiation of debonding (in case that debonding is to be initiated by electromagnetic irradiation).

In a preferred embodiment in combination with any of the above or below embodiments the adhesive is laminated onto a bio-based non-woven having one or more of the following properties: weight: 15 - 70 g/m2, thickness: 0.10 - 1.0 mm, maximum tensile strength: 70 - 120 N/50mm and maximum elongation 15-85%. It is more preferred to use a backing material fulfilling two of these properties, even more preferably three of these properties and most preferably all four of these properties.

In a preferred embodiment the backing material used can withstand radiation induced curing of the adhesive formulation without visible and/or mechanical change.

In a preferred embodiment the backing material used can withstand sterilization process without visible changes (e.g. no yellowing).

### 5.4.2 Medical Patch- and Tape-related Features

The patch of the present invention has a construction and layer structure corresponding to that of a conventional patch. It is characterized by the presence of the adhesive of the present invention instead of the presence of a standard pressure-sensitive adhesive.

Hence, the patch of the present invention may comprise one or more of the following features: - structure consisting of non-adhesive area and adhesive area;

- structure comprising non-adhesive fluid absorbent material and adhesive area;
- structure comprising moisture regulation material/compound and adhesive area; and
- structure containing active agent reservoir material and adhesive area.

The present invention also encompasses patches, wherein adhesive thickness is not the same everywhere in the patch. This can be, for instance, patches, wherein the adhesive is thicker or thinned at the edge.

When using the adhesive composition of the present invention in a medical patch or tape, it is advantageous to employ only components that are suitable for topical application to the human skin. "Suitability for topical administration to the human skin" means in one embodiment that the respective substance is neither toxic nor irritating to the skin and preferably also not an allergen. In another embodiment, said suitability means that the component of interest is authorized by European regulatory bodies such as EMA for incorporation into medical preparations that are to be administered to the human skin. In one embodiment, these are all compounds that are authorized by EMA as at June 1, 2014 for topical administration to the human skin. Additionally, the final adhesive composition should also be suitable for topical administration to the human skin. This means that the cross-linked polycondensate, the oil additive and any possibly present additional components should also be suitable for administration to human skin. However, it does not mean that individual raw materials must be suitable for administration to human skin if these are consumed completely during the manufacturing process, or if residual raw material remains only at acceptably low levels or the product can be purified such that the purified product contains no or only acceptably low levels of potentially harmful raw materials.

### 5.4.3 Sterilization

The medical tape or patch of the present invention can also be sterilized if the final application requires it. Any known method of sterilization can be used provided it does not affect adhesive strength by initiating the debonding reaction.

### 5.5. Non-medical Uses

According to another embodiment of the present invention, the adhesive composition of the invention may be used for forming layered products for use in non-medical fields. This includes in particular the manufacture of masking tapes, protective tapes and the temporary bonding of semiconductor elements.

One aspect of the present invention therefore pertains to layered products selected from masking tapes, protective tapes, temporary bonding of semiconductor elements, which are characterized by at least one layer of backing material, which is coated with the adhesive composition of the present invention.

There are no particular limitations for the backing material except that it is advantageous to select a backing material that exhibits a high degree of transparency, *e.g.* above 50%, preferably above 75%, for the wavelength region, which is contemplated for initiation of debonding (in case that debonding is to be initiated by electromagnetic irradiation).

Such non-medical layered products of the present invention may either be manufactured by coating the adhesive composition of the invention or an uncrosslinked or partially crosslinked precursor thereof onto the backing material directly, followed by cross-linking (if appropriate). Alternatively, the adhesive composition of the invention or an uncrosslinked or partially crosslinked precursor thereof may be coated onto a release liner, followed by crosslinking (if applicable) and lamination of the surface of the adhesive composition layer opposite to the release liner onto the backing material. In said latter method, crosslinking may either be performed before or after lamination.

### 6. Examples

The following examples are provided to further illustrate the invention without limiting its scope.

*Preparative Example 1: Polycondensation of dimer dicarboxylic acid and itaconic acid with the dimer diol (low amount of itaconic acid - OH terminated polyester)*

145.4 g of Pripol 1009, 1.8 g itaconic acid, 152.8 g of Pripol 2033 and 30mg 4-methoxyphenol were loaded in a 500 mL reactor equipped with a mechanical stirring system (using an "anchor" shaped stirrer) a nitrogen purge inlet and Dean-Stark separator fitted with a condenser. Next 30 mg of $Ti(O^nBu)_4$ was added to the reaction mixture and stirred at 150 - 220 rpm. During the first part of the experiment, the set-up was continuously flushed with nitrogen (flow: 1 to 2 sL/min), the mixture was heated from room temperature to 180ºC and kept at this temperature for 15h00. Next, vacuum processing was applied (with typical pressure below 10 mbar), while the reaction temperature was increased to 160°C. After 2 hours under these conditions, the reaction temperature was increased to 180°C and kept under these conditions for 2 hours after which the heating temperature was set at 200ºC for an additional hour. Subsequently the pale yellow reaction mixture was allowed to cool under vacuum; once its temperature reached 130-140ºC, the reaction vessel was vented and discharged. Polycondensate A is obtained in this manner.

*Preparative Example2: Polycondensation of dimer dicarboxylic acid and itaconic acid with the dimer diol (low amount of itaconic acid - OH terminated polyester)*

Polycondensate B is obtained in accordance with preparative example 1, but starting from 140.5 g of Pripol 1009, 3.6 g itaconic acid, 155.9 g of Pripol 2033 and 30mg 4-methoxyphenol.

*Preparative Example 3 Polycondensation of dimer dicarboxylic acid and itaconic acid with the dimer diol (high amount of itaconic acid - OH terminated polyester)*

Polycondensate C is obtained in accordance with preparative example 1, but starting from 49.7 g of Pripol 1009, 34.3 g itaconic acid, 49.7 g of Pripol 2033 and 90mg 4-methoxyphenol.

*Preparative Example 4: Polycondensation of dimer dicarboxylic acid and itaconic acid with the dimer diol (low amount of itaconic acid - COOH terminated polyester)*

Polycondensate D is obtained in accordance with preparative example 1, but starting from 151.9 g of Pripol 1009, 3.9 g itaconic acid, 144.3 g of Pripol 2033 and 90mg 4-methoxyphenol.

**Table 1.** Summary of the polymer properties (typical values).

| Polycondensate | Mn | Mw | PDI |
|---|---|---|---|
| A | 27180 | 52330 | 1.93 |
| B | 29574 | 51673 | 1.75 |
| C | 15144 | 33554 | 2.22 |
| D | 25736 | 45295 | 1.76 |

*Preparative Example 5: Typical curing protocol using an isocyanate crosslinker*

10 g of polycondensate, 1.0g of 10 wt % stock solution of photoinitiator in acetone, and 0.125 g of DESMODUR N3600 (1.25 wt %) were mixed together at room temperature. The obtained clear viscous paste was mechanically homogenized until disappearance of the air bubbles. Next the mixture was roll-coated manually at room temperature onto a PET liner and cured for 3 min at 130 ºC. The film obtained was laminated, on its "free" side, onto a protective film.

*Preparative Example 6: Typical curing protocol using an isocyanate crosslinker and an oil additive*

10 g of polycondensate, 5g of Polysorb ID 37, 1.0g of 10 wt % stock solution of photoinitiator in acetone, and 0.125 g of DESMODUR N3600 (1.25 wt %) were mixed together at room temperature. The obtained clear viscous paste was mechanically homogenized until disappearance of the air bubbles. Next the mixture was roll-coated manually at room temperature onto a PET liner and cured for 3 min at 130 ºC. The film obtained was laminated, on its "free" side, onto a protective film.

*Preparative Example 7: Typical curing protocol using a carbodiimide crosslinker*

5 g of polycondensate, 1.0g of 10 wt % stock solution of photoinitiator in acetone, and 0.25 g of Picassian WT-725 (5 wt %) were mixed together at room temperature. The obtained clear viscous paste was mechanically homogenized until disappearance of the air bubbles. Next the mixture was roll-coated manually at room temperature onto a PET liner and cured for 3 min at 130 ºC. The film obtained was laminated, on its "free" side, onto a protective film.

Adhesive 1: Polycondensate B is cured in accordance with preparative example 6 using 0.96 weight % (with regard to polycondensate) of DESMODUR N3600 as crosslinker and 1 wt% of Irgacure 2959.

Adhesive 2: Polycondensate A is cured in accordance with preparative example 6 using 0.98 weight % (with regard to polycondensate) of DESMODUR N3600 as crosslinker and 1 wt% of Irgacure 2959.

Adhesive 3: Polycondensate C is cured in accordance with preparative example 5 using 1.25 weight % (with regard to polycondensate) of DESMODUR N3600 and 1 wt% of Irgacure 2959.

Adhesive 4: Polycondensate C is cured in accordance with preparative example 5 using 1.25 weight % (with regard to polycondensate) of DESMODUR N3600 as crosslinker and 1 wt% of Irgacure TPO-L.

Adhesive 5: Polycondensate D is cured in accordance with preparative example 7 using 10 weight % (with regard to polycondensate) of Picassian WT-725 as crosslinker and 1 wt% of Irgacure 2959.

Adhesive 6: Polycondensate D is cured in accordance with preparative example 7 using 12.5 weight % (with regard to polycondensate) of Picassian WT-725 as crosslinker and 1 wt% of Irgacure 2959.

*Peel force measurement*

Bakelite substrates were used for these measurements. First, adhesive tape samples were cut in slices of 25 mm width and 60mm length. The tapes were secured using a 2 kg roller and allowed for 30 min dwell time before removal. Next the samples were exposed (peel force after post-curing) or not (peel force before post-curing) to UV light using a UV-chamber equipped with UV-A and UV-B lamps (Chamber BS-02; Opsytec Dr. Gröbel GmbH, Germany). With this equipment, a dosage of UV-A and UV-B of 0.05 J/cm$^2$ is typically obtained within ~ 30 seconds of irradiation. Next the tapes were peeled at 180 degrees at a rate of 300mm/min. The peel force values were measured using a Shimadzu Ag-X universal tensile testing machine equipped with a 1000N force cell.

**Table 2.** Summary of the adhesive properties (typical values).

| | Peel Force [N/25mm] | | % Switch* | UV-A and UV-B dosage (J/cm$^2$) |
|---|---|---|---|---|
| | Before post-curing (P$_1$) | After post-curing (P$_2$) | | |
| **Adhesive 1** | 8,05 | 3,95 | 51 | 1.5 |
| **Adhesive 2** | 8,22 | 1,53 | 81 | 1.5 |
| **Adhesive 3** | 13,54 | 0,94 | 93 | 1.5 |
| **Adhesive 4** | 3.60 | 0.15 | 95 | 0.05 |
| **Adhesive 5** | 5.14 | 1.98 | 61 | 0.5 |
| **Adhesive 6** | 2.94 | 1.64 | 44 | 0.5 |

*% Switch reflects the % reduction in peel strength after exposure to light and is calculated as followed:

$$*\% \text{ Switch} = 100*[1-(P_2/P_1)]$$

where P$_2$ is the peel force after post-curing and P$_1$ is the peel force before post-curing (Boyne and coworkers International Journal of Adhesion & Adhesives 21 (2001) 49-53).

Additionally, the evolution of the peel force value as a function of the irradiation dosage was measured for adhesive 4 of Example 1. The results of this experiment are shown in Figure 1.

**Claims**

1. A composition, comprising:

    A) an ethylenically unsaturated polycondensate of

        a) a dicarboxylic acid, and
        b) a diol, and

c) an ethylenically unsaturated dicarboxylic acid and/or an ethylenically unsaturated diester monomer.

and
AB) a cross-linking agent having at least 3 functional groups per molecule;

wherein the unsaturated polycondensate and the cross-linking agent are capable of reacting with each other to form an adhesive substance via a chemical reaction that does not involve the ethylenically unsaturated bonds of the repeating units contained in the polycondensate A).

2. Composition according to claim 1, wherein the dicarboxylic acid (a) is a dicarboxylic acid selected from general formula (I),

$$R^aOOC\text{-}R^1\text{-}R^2\text{-}R^3\text{-}COOR^b \qquad (I)$$

*wherein R$^1$ is* absent or selected from $C_{1-15}$ alkylene, $C_{11-15}$ alkenylene, and $C_{2-15}$ alkynylene, wherein each of these groups is optionally substituted; R$^2$ is selected from $C_{1-12}$ alkylene, $C_{11-12}$ alkenylene, and $C_{2-12}$ alkynylene, each of which may contain one or two 5-7-membered rings, which may optionally be condensed wherein each of these groups is optionally substituted; R$^3$ is absent or selected from $C_{1-15}$ alkylene, $C_{11-15}$ alkenylene, and $C_{2-15}$ alkynylene wherein each of these groups is optionally substituted; each of R$^a$ and R$^b$ is independently selected from hydrogen, alkyl groups having 1 to 24 carbon atoms, and glyceryl, wherein the dicarboxylic acid (a) is preferably a dimer of fatty acids.

3. Composition according to claim 1 or 2, wherein the diol (b) is a diol selected from general formula (II),

$$HO\text{-}R^4\text{-}R^5\text{-}R^6\text{-}OH \qquad (II)$$

wherein R$^4$ is absent or selected from $C_{1-15}$ alkylene, $C_{2-15}$ alkenylene, and $C_{2-15}$ alkynylene, wherein each of these groups is optionally substituted; R$^5$ is selected from $C_{1-12}$ alkylene, $C_{2-12}$ alkenylene, and $C_{2-12}$ alkynylene, each of which may contain one or two 5-7-membered rings, which may optionally be condensed, wherein each of these groups is optionally substituted; R$^6$ is absent or selected from $C_{1-15}$ alkylene, $C_{2-15}$ alkenylene, and $C_{2-15}$ alkynylene, wherein each of these groups is optionally substituted, wherein the diol (b) is preferably a dimer of fatty alcohols.

4. Composition according to any one of claims 1 to 3, wherein the ethylenically unsaturated dicarboxylic acid monomer, and/or an ethylenically unsaturated diester monomer (c) is selected from the following general formula (III):

$$R^cOOC\text{-}R^7\text{--}COOR^d \qquad (III)$$

wherein R$^7$ is selected from $C_{1-10}$ alkylene, $C_{2-10}$ alkenylene, and $C_{3-10}$ alkynylene and wherein each of these groups may be unsubstituted or substituted by 1-3 substituents, wherein said substituents are preferably selected from $C_{1-8}$ alkyl, $C_{1-8}$ alkenyl, $C_{2-8}$ alkynyl, $C_{1-6}$ alkoxy, and -R$^8$-COOR$^9$ wherein R$^7$ and/or at least one of its substituents is selected such that one or more carbon-carbon double bonds is/are present in the part of the molecule formed by R$^7$ and its substituents, wherein such carbon-carbon double bond(s) may also be formed between a carbon atom of R$^7$ and the carbon atom of the substituent, which is covalently bonded to said carbon atom of R$^7$, wherein R$^8$ is $C_{1-3}$ alkylene, $C_{2-3}$ alkenylene or $C_{2-3}$ alkynylene and R$^9$ is $C_{1-6}$ alkyl, wherein each of R$^c$ and R$^d$ is independently selected from hydrogen and alkyl groups having 1 to 6 carbon atoms and wherein the one or more carbon-carbon double bonds may each independently have cis or trans (Z or E) stereochemistry.

5. The composition of any one of claims 1 to 4, wherein
dicarboxylic acid a) is selected from itaconic acid and/or citraconic acid and/or mesaconic acid and/or aconitic acid, and/or their respective dialkyl esters.

6. Composition according to any one of claims 1 to 5, wherein the composition further comprises an oil additive, wherein the oil additive is preferably selected from sorbitan mono- or di-esters of fatty acids, polyethylene glycol diester, sesame oil, isosorbide diester, mixtures of isosorbide diesters, sorbitol mono- and diesters, oleate esters, isopropyl myristate or mixtures thereof.

7. The composition of any one of claims 1 to 6, further comprising a polyester not containing ethylenically unsaturated bonds.

8. The composition of any of claims 1 to 7, wherein the diol (b) is a dimer of a fatty alcohol, which is obtained by hydrogenation of a dimer of a fatty acid.

9. The composition of any of claims 2 and 8, wherein the fatty acid used to form the dimer of a fatty acid or its dialkylester is a linoleic, linolenic, stearidonic, eicosadienoic, eicosatrienoic, eicosatetraenoic, eicosapentaenoic, clupanodonic, docosahexaenoic, tetracosapentaenoic, nisinic, mead, arachidonic, adrenic or calendic acid, and/or mixtures thereof; wherein the alkyl group in the dialkylester has from 1 to 24 carbon atoms; or wherein the dialkylester is a triglyceride.

10. The composition of any of claims 1 to 9, wherein the concentration of component (AB) is from 0.1 to 30 wt% based on the weight of polycondensate (A) representing 100 wt%.

11. The composition of any of claims 1 to 10, wherein the polycondensate has a weight average molecular weight of 20,000 to 100,000 g/mol.

12. An adhesive composition, obtainable by at least partly cross-linking the composition of any one of claims 1 to 11, wherein the cross-linked polycondensate preferably has a gel content value between 30 % to 95%, preferably between 40 % to 80%.

13. A method for preparing the adhesive composition of claim 12, comprising the steps of:

(i) providing the composition according to any one of claims 1 to 11; and
(ii) subjecting the composition to conditions that induce a chemical reaction between polycondensate (A) and cross-linking agent (AB) that does not involve the ethylenically unsaturated bonds in the repeating units contained in the polycondensate (A).

14. Use of the composition according to any one of claims 1 to 11 or the adhesive composition according to claim 12 for laminating a sheet or a film.

15. Laminated product containing the composition according to any one of claims 1 to 11 or the adhesive composition according to claim 12, which is preferably selected from the group consisting of a medical tape, a medical patch, masking tape, and protective tape.

16. Method for debonding a laminated product according to claim 15 from a substrate surface, the method comprising the step of subjecting the laminated product to conditions selected from irradiation selected from electromagnetic radiation having a wavelength in the range of 200 to 800 nm, heating to a temperature of from 50 to 200 °C; and exposing the laminated product to oxidizing or reducing conditions, wherein the substrate surface is preferably not the human skin.

Figure 1

Europäisches
Patentamt

European
Patent Office

Office européen
des brevets

## EUROPEAN SEARCH REPORT

Application Number

EP 14 17 3248

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 4 568 719 A (TADA HISASHI [JP] ET AL)<br>4 February 1986 (1986-02-04)<br>* column 1, line 61 - column 1, line 68;<br>claims 1, 9; example 1 *<br>----- | 1-6,<br>10-14<br>7-9,15,<br>16 | INV.<br>C09J167/06<br>C09J175/06<br>C08L67/06 |
| X<br>A | EP 2 500 392 A1 (NITTO DENKO CORP [JP])<br>19 September 2012 (2012-09-19)<br>* paragraph [0026] - paragraph [0043];<br>claims 1, 3; example 2; table 2 *<br>----- | 1-15<br>16 | ADD.<br>C08G18/68 |
| E | EP 2 749 621 A1 (DAINIPPON INK & CHEMICALS [JP]) 2 July 2014 (2014-07-02)<br>* paragraph [0021] - paragraph [0165];<br>claims 1, 9, 26, 28; examples 1-3; table 1<br>* | 1-16 | |
| X<br>A | & WO 2013/027609 A1 (DAINIPPON INK & CHEM INC) 28 February 2013 (2013-02-28)<br>* paragraph [0021] - paragraph [0165];<br>claims 1, 9, 26, 28; examples 1-3,<br>Production Example 1; table 1 *<br>----- | 1-4,<br>12-15<br>5-11,16 | |
| X<br>A | EP 2 492 325 A1 (NITTO DENKO CORP [JP])<br>29 August 2012 (2012-08-29)<br>* paragraph [0032] - paragraph [0125];<br>claim 1; examples Polyester A, example 1 *<br>----- | 1-5,7,<br>9-16<br>6,8 | TECHNICAL FIELDS SEARCHED (IPC)<br><br>C09J<br>C08G<br>C08L |

The present search report has been drawn up for all claims

| Place of search | Date of completion of the search | Examiner |
|---|---|---|
| The Hague | 6 January 2015 | Enescu, Cristina |

EPO FORM 1503 03.82 (P04C01)

**ANNEX TO THE EUROPEAN SEARCH REPORT
ON EUROPEAN PATENT APPLICATION NO.**

EP 14 17 3248

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2015

| Patent document cited in search report | | Publication date | Patent family member(s) | | Publication date |
|---|---|---|---|---|---|
| US 4568719 | A | 04-02-1986 | NONE | | |
| EP 2500392 | A1 | 19-09-2012 | CN | 102597151 A | 18-07-2012 |
| | | | EP | 2500392 A1 | 19-09-2012 |
| | | | US | 2012232226 A1 | 13-09-2012 |
| | | | WO | 2011055827 A1 | 12-05-2011 |
| EP 2749621 | A1 | 02-07-2014 | CN | 103764783 A | 30-04-2014 |
| | | | EP | 2749621 A1 | 02-07-2014 |
| | | | JP | 5440892 B2 | 12-03-2014 |
| | | | US | 2014329950 A1 | 06-11-2014 |
| | | | WO | 2013027609 A1 | 28-02-2013 |
| EP 2492325 | A1 | 29-08-2012 | CN | 102575132 A | 11-07-2012 |
| | | | EP | 2492325 A1 | 29-08-2012 |
| | | | JP | 5519996 B2 | 11-06-2014 |
| | | | JP | 2011088958 A | 06-05-2011 |
| | | | US | 2012202058 A1 | 09-08-2012 |
| | | | WO | 2011049111 A1 | 28-04-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120202058 A1
- EP 2567996 A1
- WO 2011023255 A1
- WO 9727253 A1
- US 3989609 A
- WO 2010108965 A1
- US 3299010 A
- US 20100316845 A1
- WO 03061720 A1
- WO 0061692 A
- US 4286047 A
- US 20110224593 A1
- US 20130144006 A1

**Non-patent literature cited in the description**

- **BOYNE.** *International Journal of Adhesion & Adhesives,* 2001, vol. 21, 49-53
- *International Journal of Adhesion & Adhesives,* 1999, vol. 19, 29-34
- *International Journal of Adhesion & Adhesives,* 2001, vol. 21, 49-53
- **VENDAMME R. ; EEVERS W.** *Macromolecules,* 2013, vol. 46 (6), 3395-3405
- **GUBBLES et al.** *Macromolecules,* 2013, vol. 46, 3975-3984
- **VENDAMME et al.** *Macromolecules,* 2013, vol. 46, 3395-3405
- CTFA International Cosmetic Ingredient Dictionary and Handbook. 2004
- Progress in Organic Coatings. 1999, vol. 35, 19-29